# EUROPÄISCHE PATENTSCHRIFT

(11) **EP 0 787 475 B1**
(45) Veröffentlichungstag und Bekanntmachung des Hinweises auf die Patenterteilung: **09.01.2002**
(21) Anmeldenummer: 96116906.7
(22) Anmeldetag: 21.10.1996
(51) Int. Cl.: A61G 7/018

(54) **Steuerungssystem für elektromotorisch betätigbare Verstelleinrichtungen für Krankenhausbetten**
Control system for adjusting device by means of electric motors for hospital beds
Système de commande pour dispositif de réglage à moteurs électriques pour lits d'hôpitaux

(30) Priorität: 31.01.1996 DE 19603318
(43) Veröffentlichungstag der Anmeldung: 06.08.1997
(73) Patentinhaber: Dewert Antriebs- und Systemtechnik GmbH & Co. KG, D-32278 Kirchlengern (DE)
(72) Erfinder: Ctvrtnicek, Martin, 32257 Bünde (DE); Palm, Dieter, 33719 Bielefeld (DE); Schneider, Johannes, 32278 Kirchlengern (St. Quernheim) (DE)
(74) Vertreter: Loesenbeck, Karl-Otto, Dipl.-Ing.

(56) Entgegenhaltungen:
- GB-A- 2 221 387
- US-A- 4 435 862
- US-A- 4 769 584
- US-A- 5 195 198

## Beschreibung

Die Erfindung betrifft ein Steuerungssystem für elektromotorisch betätigbare Verstelleinrichtungen für Krankenhausbetten, Pflegebetten oder ähnliche Möbel gemäß Oberbegriff des Anspruches 1. Ein solches System ist aus US-A-4 435 862 bekannt.

Es sind gattungsgemäße Steuerungssysteme für Verstelleinrichtungen an Krankenhausbetten bekannt, die mittels Mikroprozessorsteuerungen die mechanisch, durch Gasdruckfedern unterstützten Verstelleinrichtungen durch elektromotorische Antriebe ersetzen und sowohl für den Patienten als auch für das Pflegepersonal große Vorteile besitzen. Hierzu werden je nach Ausbaugrad des Krankenhausbettes an allen oder einigen Verstelleinrichtungen Elektromotoren vorgesehen, die mittels bekannter mechanischer Übertragungskomponenten die Verstelleinrichtungen wahlweise betätigen. Aufgrund der gerade auch im Intensivpflegebereich vielfältigen Anforderungen werden üblicherweise mehrere Motoren an einem Krankenhausbett vorgesehen, die zentral von einer gemeinsamen Steuereinheit betrieben werden. Die Steuereinheit ist dabei zum einen über eine Kontrollbox steuerbar, die eine Zugänglichkeit aller Funktionen der Verstelleinrichtungen des Krankenhausbettes für das Pflegepersonal ermöglicht. Hierbei sind insbesondere auch Funktionen vorgesehen, die nur das Pflegepersonal, nicht jedoch der Patient, vornehmen können sollen. Darüberhinaus ist in der Regel für die Bedienung durch den Patienten ein weiterer Handschalter vorgesehen, mit dem der Patient selbst seine Lage verändern kann. An diesem Handschalter steht üblicherweise nur eine Untermenge aller möglichen Funktionen zur Verfügung, die darüberhinaus vom Pflegepersonal gezielt freigegeben oder abgeschaltet werden können. Derartige gattungsgemäße Steuerungssysteme werden üblicherweise durch Netzspannung aus einem 230 Volt-Netz gespeist, alternativ besteht die Möglichkeit des Betriebs mittels eines am Krankenhausbett vorgesehenen, wiederaufladbaren Akkumulators, der bei Stromausfall oder beim Transport des Krankenhausbettes die Funktionen der Verstelleinrichtungen gewährleistet.

Die bekannten gattungsgemäßen Steuerungssysteme weisen jedoch sowohl für den Betrieb als auch für die Herstellung und den Service deutliche Nachteile auf. Für die elektromotorische Bewegung der Verstelleinrichtungen werden mit Ausnahme des Motors für die Rückenlehne, der ein Potentiometer beinhaltet, üblicherweise Motoren mit inkrementellen Wegmeßsystemen, beispielsweise Wegmeßsystemen mittels Reed-Kontakten. Hierdurch ist beispielsweise für das Steuerungssystem nicht immer sicher erkennbar, in welcher exakten Stellung sich die einzelnen Verstelleinrichtungen des Krankenhausbettes tatsächlich befinden. Beispielsweise kann durch Zählfehler des inkrementellen Wegmeßsystems, Stromausfall oder auch eine mechanische Veränderung von Verstelleinrichtungen beispielsweise zur schnellen Erreichung einer Schocklage, die Kenntnis der Steuerung über die Stellung der Verstelleinrichtungen des Krankenhausbettes verlorengehen. Neben einer möglichen Gefährdung des Patienten durch dadurch unzulässige Bewegungskombinationen einzelner Verstelleinrichtungen ist ein hoher Wiedereinrichtungsaufwand notwendig, der für einen Abgleich zwischen den tatsächlichen Stellungen der Verstelleinrichtungen und der Steuerung notwendig ist. Darüberhinaus sind die bekannten Steuerungssysteme üblicherweise entweder für spezielle Kinematiken der Verstelleinrichtungen eines Krankenhausbettes ausgelegt oder werden werksseitig fest auf eine derartige Kinematik eingestellt, so daß durch die hieraus resultierende starre Steuerungsstruktur keine Anpassung an geänderte Gegebenheiten eines konkreten Krankenhausbettes, geschweige denn eine Umprogrammierung von Bewegungscharakteristiken, möglich ist. Auch sind die bekannten Steuerungssysteme nicht sicher in Bezug auf die Sicherheit im Sinne einer Erstfehlersicherheit nach dem europäischen Normentwurf IEC 601-2-38, Sektion 9, Klausel 52.1.101.

Aufgabe der vorliegenden Erfindung ist es daher, ein Steuerungssystem der gattungsgemäßen Art derart weiterzubilden, daß ein eigensicherer Betrieb eines Krankenhausbettes unter allen Umständen und ohne Gefährdung des Patienten beispielsweise durch Fehlfunktionen oder durch Stromausfall oder manuelle Verstellung einzelner Achsen gewährleistet ist, wobei insbesondere auch eine einfache und flexible Anpassung an verschiedenste Kinematiken und Betriebsweisen verschiedener Krankenhausbettkonstruktionen möglich sein soll, die insbesondere auch außerhalb der Herstellungsstätte des Krankenhausbettes beispielsweise durch einen Service vornehmbar ist.

Die Lösung der erfindungsgemäßen Aufgabe ergibt sich aus den kennzeichnenden Merkmalen des Anspruches 1 in Verbindung mit dem Oberbegriff.

In erfindungsgemäßer Weise wird die besondere Flexibilität und sichere Beherrschbarkeit der Verstelleinrichtungen eines Krankenhausbettes durch das Steuerungssystem dadurch erreicht, daß an jeder der elektromotorisch betätigten Verstelleinrichtung des Krankenhausbettes zur Erfassung der aktuellen Stellung der Verstelleinrichtung absolut arbeitende Wegmeßeinrichtungen vorgesehen sind, die unabhängig von äußeren Einflüssen, wie beispielsweise Stromausfall, mechanischen Verstellungen oder gerätespezifischen Fehlfunktionen, eine exakte Angabe über die jeweilige Position und Lage der Verstelleinrichtung erlauben. Hierdurch ist die Voraussetzung geschaffen, daß das frei programmierbare Steuerungssystem in jedem Betriebszustand über die tatsächlich vorliegenden Verhältnisse der Verstelleinrichtungen informiert ist und patientengefährdende Fehlfunktionen, wie beispielsweise unzulässige Stellungen einzelner Verstelleinrichtungen zueinander oder Überfahren von mechanischen Endpositionen oder dergleichen, sicher verhindert sind. Insbesondere ist es hierdurch auch möglich, beispielsweise in Notsituationen, zur Erreichung bestimmter medizinisch indizierter Lagen des Patienten einen mechanischen Eingriff in die Verstelleinrichtungen zuzulassen, ohne daß im Anschluß daran das Krankenhausbett mit einem aufwendigen Prozeß in eine Referenzstellung zurückgefahren werden muß, um eine Synchronisation zwischen Steuerungssystem und Krankenhausbett vorzunehmen. Darüberhinaus sind Fehlersituationen aufgrund von Stromausfällen schon von daher unkritisch, da auch nach einem Stromausfall ein absolut arbeitendes Wegmeßsystem immer wieder die exakte Position der Verstelleinrichtung anzeigt. Darüberhinaus wird die besonders vorteilhafte Funktionsweise des erfindungsgemäßen Steuerungssystems dadurch verbessert, daß die Steuereinheit einen frei programmierbaren Miktocontroller aufweist, dessen Steuerungsprogramm und interne Parameter mit einem an das Steuerungssystem zeitweise anschließbarem Programmiergerät derart veränderbar sind, daß das Steuerungssystem an bettenspezifische Bewegungsmöglichkeiten auch unterschiedlicher Verstelleinrichtungen und an unterschiedliche Betriebsweisen anpaßbar ist. Hierdurch ist gewährleistet, daß je nach Einsatzfall des Krankenhausbettes unterschiedliche Bewegungsprogramme und für jedes Bewegungsprogramm wieder eine Vielzahl von bettypspezifischen Parametern frei wählbar und mit minimalem Aufwand in das Steuerungssystem einspeisbar sind. Im Gegensatz zu den Steuerungssystemen aus dem Stand der Technik ermöglicht diese über ein externes, zeitweise an das Steuerungssystem anschließbares Programmiergerät vorgenommene Veränderung des Steuerungsprogramms und interner Parameter eine jederzeitige Veränderung und Anpassung der Steuerungsfunktionen an unterschiedliche Kinematiken verschiedener Krankenhausbetten bzw. unterschiedliche Aufrüstungsgrade des gleichen Krankenhausbettes. Beispielsweise ist durch besondere Behandlungen eines Patienten oder Umstellung des Geräteparkes auch während der Betriebszeit eines Krankenhausbettes eine Anpassung an geänderte Verhältnisse durchaus notwendig. Beispielsweise können durch Zusatzeinrichtungen vorhandene Krankenhausbetten umgerüstet oder nachgerüstet werden, die damit einen anderen Einsatzschwerpunkt oder den Einsatz in anderen Abteilungen eines Krankenhauses ermöglichen. Eine derartige Veränderung eines bestehenden Krankenhausbettes mit der erfindungsgemäßen Steuerung ist dadurch sehr einfach möglich, daß mit Hilfe des externen Programmiergerätes, das vorzugsweise über eine genormte Steckbuchse an das Steuerungssystem einfach anschließbar ist, die mechanisch nachgerüsteten oder auch schon vorgesehenen Funktionen des Krankenhausbettes in Betrieb gesetzt oder modifiziert werden. Dies kann in besonders vorteilhafter Weise auch innerhalb des Krankenhauses, beispielsweise auch ohne Einschaltung des Services des Herstellers des Steuerungssystems, erfolgen. Darüberhinaus bietet sich dem Anwender von Krankenhausbetten die Möglichkeit, durch Vorgabe unterschiedlicher Bewegungsprogramme leicht eine Anpassung an unterschiedliche Anforderungen in verschiedenen Abteilungen eines Krankenhauses vorzunehmen. Auch dem Hersteller eines Krankenhausbettes bietet diese flexible Umprogrammierung große Vorteile, da das erfindungsgemäße Steuerungssystem im wesentlichen modular aufgebaut und durch den modularen Aufbau an eine Vielzahl von Bewegungscharakteristiken verschiedener Krankenhausbettkonstruktionen angepaßt werden kann. Hierdurch wird der Aufwand zum Einrichten eines Krankenhausbettes mit einer speziell darauf abgestellten Steuerung überflüssig, es kommt nur noch ein an die vorliegende Kinematik eines Krankenhausbettes flexibel anpaßbares Steuerungssystem zum Einsatz. Auch sind Wartungen oder Fehlerbeseitigungen im Steuerprogramm durch Einspielen einer entsprechend korrigierten Version des Steuerprogramms über das Programmiergerät einfach und kostengünstig im Rahmen normaler Servicetermine möglich.

In einer besonders vorteilhaften Ausführungsform werden das Steuerungsprogramm und die internen Parameter im Steuerungsprogramm dauerhaft gespeichert, wobei dies in einer weiteren bevorzugten Ausführungsform mit Hilfe nicht flüchtiger, immer wieder neu beschreibbarer Speichereinrichtungen wie beispielsweise einem EEPROM erfolgen kann.

Besonders vorteilhaft insbesondere für den Hersteller des Steuerungssystems bzw. Krankenhausbettes ist die Möglichkeit, die internen Parameter und das Steuerungsprogramm auch in dem zeitweise anschließbaren Programmiergerät vorzugsweise als bettypenspezifisches Profil abzuspeichern und dieses Profil in die Steuerungen anderer, vorzugsweise baugleicher Krankenhausbetten einzuspeichern. Hierdurch wird nach dem Einrichten eines Prototypenbettes entsprechend den Einsatzanforderungen die Einrichtung weiterer gleichartiger Betten auf ein Überspielen des Profils des Prototypenbettes in deren Steuerungen reduziert.

Das Steuerungsprogramm und die internen Parameter können in einer besonders bevorzugten Ausführungsform bettypenspezifische Vorgaben sein, die beispielsweise unzulässige Winkelüberschreitungen einzelner oder mehrerer Verstelleinrichtungen verhindern sollen. Beispielsweise kann hierdurch ein scherenartiges Zusammenklappen von Rückenlehne und Oberschenkellehne eines Krankenhausbettes sicher verhindert werden, das ansonsten eine Gefährdung des Patienten hervorrufen könnte. Hierbei ist insbesondere von Bedeutung, daß das Steuerungssystem zu jedem Zeitpunkt exakt über die Stellung von Oberschenkellehne und Rückenlehne durch Verwendung absoluter Wegmeßsysteme informiert ist. Weiterhin können beispielsweise Endstellungen der einzelnen Verstelleinrichtungen software-mäßig vorgegeben werden, wodurch der Einsatz ansonsten notwendiger mechanischer Endschalter und daraus resultierender geringer Flexibilität entfällt. Ein Endschalter kann somit als rein elektronischer Endschalter ausgeführt sein. Beispielsweise können auch sogenannte Neutralpositionen wie eine ausgestreckte Lage des Patienten oder sonstige ausgewählte Lagen einfach vorgesehen werden. Weiterhin ist die Vorwahl der Verstellgeschwindigkeiten jeder einzelnen Verstelleinrichtung getrennt möglich.

In einer weiteren bevorzugten Ausführungsform werden durch das Steuerungsprogramm und die internen Parameter des Steuerungssystems bettypenspezifische Betriebsarten vorgegeben. Dies kann beispielsweise als wiederaufrufbare Abspeicherung von Bettstellungen erfolgen, die als Memory-Funktion beispielsweise vom Patienten oder dem Pflegepersonal durch Verstellung des Bettes und Übernahme dieser Stellung in einen Speicher einfach festlegbar ist. Darüberhinaus können medizinisch indizierte Bettstellungen wie beispielsweise die Schockstellung, die Trendelburgstellung und die Antitrendelburgstellung vorgegeben werden. Darüberhinaus ist die Bewegungssynchronisation mehrerer Verstelleinrichtungen, beispielsweise zur Erzielung von Knieknickbewegungen oder dergleichen weitgehend flexibel vorgebbar, so daß der Bedienungskomfort an alle Bedürfnisse von Pflegepersonal und Patienten anpaßbar ist.

Bei einer weiteren bevorzugten Ausführungsform wird die Programmierung über das zweitweise anschließbare Programmiergerät mit einem dialogfähigen Programm vorgenommen, in dem benutzerunterstützend alle Eingaben für das Überspielen in das Steuerungssystem vorbereitet und vorgenommen werden können. Darüberhinaus kann dieses dialogfähige Programm auch Betriebszustände der Verstelleinrichtungen des Krankenhausbettes erfassen und beispielsweise grafisch darstellen, was auch durch die Verwendung von absolut arbeitenden Wegmeßsystemen für die elektromotorisch betätigten Verstelleinrichtungen sicher ermöglicht wird. In einer weiteren vorteilhaften Ausführungsform ist das zeitweise anschließbare Programmiergerät ein Personalcomputer, beispielsweise ein tragbarer Laptop, Notebook oder dergleichen. Dieses zeitweise anschließbare Programmiergerät kann in besonders vorteilhafter Weise auch mit Funktionen für Servicezwecke ausgestattet oder dazu vorgesehen sein.

Durch den flexiblen Aufbau und die weitgehend anpaßbare Betriebsweise des Steuerungssystems ist in einer weiteren Ausführungsform in vorteilhafter Weise dafür gesorgt, daß Sicherheitselemente und Sicherheitsfunktionen in der Steuerung des Krankenhausbettes ständig Steuerungskomponenten und Signalzustände auf Vorliegen korrekter Funktion überprüfen und die tatsächliche Ausführung von Bewegungen der Verstelleinrichtungen erst dann freigeben, wenn eine Überprüfung dieser Steuerungskomponenten und Signalzustände im Sinne der Erstfehlersicherheit gemäß dem europäischen Normentwurf IEC 601-2-38, Sektion 9, Klausel 52.1.101 stattgefunden hat. In einer bevorzugten Ausführungsform wird der im Steuerungssystem enthaltene Mikrokontroller durch eine Watchdog-Funktion ständig überprüft, um einen Ausfall des Mikrokontrollers zu erkennen und einen weiteren Betrieb de Steuerungssystems sofort zu unterbinden.

Eine weitere Erhöhung der Fehlersicherheit ergibt sich durch die Verwendung von Potentiometern als Wegmeßsysteme für jede elektromotorisch betätigbare Verstelleinrichtung, darüberhinaus können die Elektromotoren mechanisch selbsthemmend ausgeführt sein, um eine Sicherstellung der Lage der Verstelleinrichtungen auch bei Stromausfall zu gewährleisten.

Insbesondere für das Komfortverhalten eines Krankenhausbettes ist ein weiches Anfahren und Abbremsen der Motoren durch Spannungsregelung beispielsweise mittels Pulsweitenmodulation vorsehbar, wodurch ein ruckfreier Betrieb insbesondere für den Intensivpflegebereich bei gleichzeitig geringen Verschleißraten der Antriebe gewährleistet ist.

Zur weiteren Absicherung der Funktionen im Hinblick auf beabsichtigte Verstellungen oder Verstellungen bei vorliegenden Fehlerfällen ist es vorteilhaft, daß für jeden Motor eine individuelle Strombegrenzung vorgebbar ist, die beispielsweise bei einem Auffahren auf mechanische Hindernisse oder dergleichen eine schnelle Abschaltung der Bewegung der Verstelleinrichtung gewährleistet. Hierbei kann selbst bei bewußter oder unbewußter Fehlbedienung einzelner Verstelleinrichtungen kein wesentlicher Schaden beispielsweise eines Patienten hervorgerufen werden.

In einer weiteren bevorzugten Ausführungsform wird bei Ansprechen der Strombegrenzung einer Verstelleinrichtung und gleichzeitig weiterhin betätigten Tasten statt einer Stillsetzung der Verstelleinrichtung eine kurzzeitige Drehrichtungsumkehr zum Freifahren der Verstelleinrichtung vorgenommen. Erst danach erfolgt ein Stillsetzen dieser Verstelleinrichtung. Dies ist beispielsweise von besonderem Vorteil, falls Patient oder Bedienungspersonal aufgrund von Fehlbedienungen an mechanischen Klemmstellen des Krankenhausbettes eingeklemmt sind und nicht schnell genug auf die Klemmung durch Umkehr der Bewegungsrichtung reagieren. Durch die automatische kurzzeitige Drehrichtungsumkehr wird die Verstelleinrichtung von dem Hindernis freigefahren, sofern beispielsweise der Patient weiterhin die Verstelltasten gedrückt hält, wobei dieses Freifahren auch ohne aktive Mitwirkung des ggf. von der Klemmung Betroffenen vorgenommen wird.

Eine weitere Erhöhung der Sicherheit des Betriebes des Krankenhausbettes ergibt sich daraus, daß der Betrieb jeder Verstelleinrichtung nur bei gleichzeitiger Betätigung einer Funktionstaste und einer Freigabetaste vornehmbar ist. Hierdurch wird analog zu einer "Zweihandbedienung" eine weitere Sicherheit gegen unbeabsichtigten Verstellbewegungen erreicht.

Insbesondere für eine energiesparende Betriebsweise eines erfindungsgemäßen Steuerungssystems ist eine zeitabhängige Abschaltung des Mikrokontrollers in Form einer Schlaffunktion der Steuerung vorsehbar, die nach dem Ende einer Betätigung von Funktionen automatisch vorgenommen wird. Eine derartige Betätigung senkt den Stromverbrauch und verlängert die Lebensdauer eines erfindungsgemäßen Steuerungssystems, indem das Steuerungssystem nur dann in vollem Betrieb ist, wenn tatsächlich Funktionen benötigt werden. Eine derartige Betriebsweise des erfindungsgemäßen Steuerungssystems im Schlafmodus ist allein durch die Verwendung von absolut wirkenden Wegmeßsystemen erzielbar, da bei den bekannten, inkrementellen Wegmeßsystemen das Steuerungssystem ständig auf zu zählende Impulse reagieren muß und daher ein Stillsitzen des Steuerungssystems nicht erfolgen darf. In einer weiteren Ausprägung weist die Schlaffunktion der Steuerung Vorkehrungen auf, damit die volle Funktion des Steuerungssystems in kurzer Zeit reaktivierbar ist, beispielsweise durch Drücken einer beliebigen Taste eines der Bedienelemente.

Das erfindungsgemäße Steuerungssystem wird entweder über einen Netzanschluß und/oder einen wiederaufladbaren Akkumulator mit Strom versorgt, wobei das Steuerungssystem in einer weiteren Ausprägung automatisch das Anschließen eines Akkumulators erkennt und diesen je nach Lagezustand des angeschlossenen Akkus automatisch lädt. Darüberhinaus kann das Steuerungssystem automatisch einen defekten Akkumulator erkennen und den defekten Zustand des Akkumulators für das Bedienungspersonal signalisieren. Hierdurch kann sicher vermieden werden, daß bei Netzausfall die Funktionsfähigkeit des Krankenhausbettes zeitweilig gestört ist.

Darüberhinaus weist das Steuerungssystem Vorrichtungen auf, um eine drohende Tiefentladung des Akkumulators zu verhindern, indem die drohende Tiefentladung signalisiert und die Funktionen der Verstelleinrichtung des Krankenhausbettes gesperrt werden. In einer weiteren, zur Sicherheit dienenden Funktionsweise wird auch bei Ansprechen des Tiefentladeschutzes ein kurzzeitiger Notbetrieb des Steuerungssystems und damit der Verstelleinrichtungen ermöglicht.

Die Schlaffunktion des Steuerungssystems wird in einer weiteren Ausprägung nur dann aktiviert, wenn der angeschlossene Akkumulator vollgeladen ist. Ansonsten bei noch nicht vollgeladenem Akkumulator und angeschlossener Netzspannung wird vorrangig eine Volladung des Akkus vorgenommen.

Eine besonders vorteilhafte Ausführungsform des erfindungsgemäßen Steuerungssystems zeigt die Zeichnung.

Es zeigen:
- Figur 1: ein Blockschaltbild der gesamten Steuerung einschließlich der daran angeschlossenen Komponenten,
- Figur 2: ein Prinzipschaltbild des Motor-Leistungsteils für einen Antrieb einer Verstelleinrichtung und das Prinzip der Erfassung der Motorposition sowie der Motorstrombegrenzung.

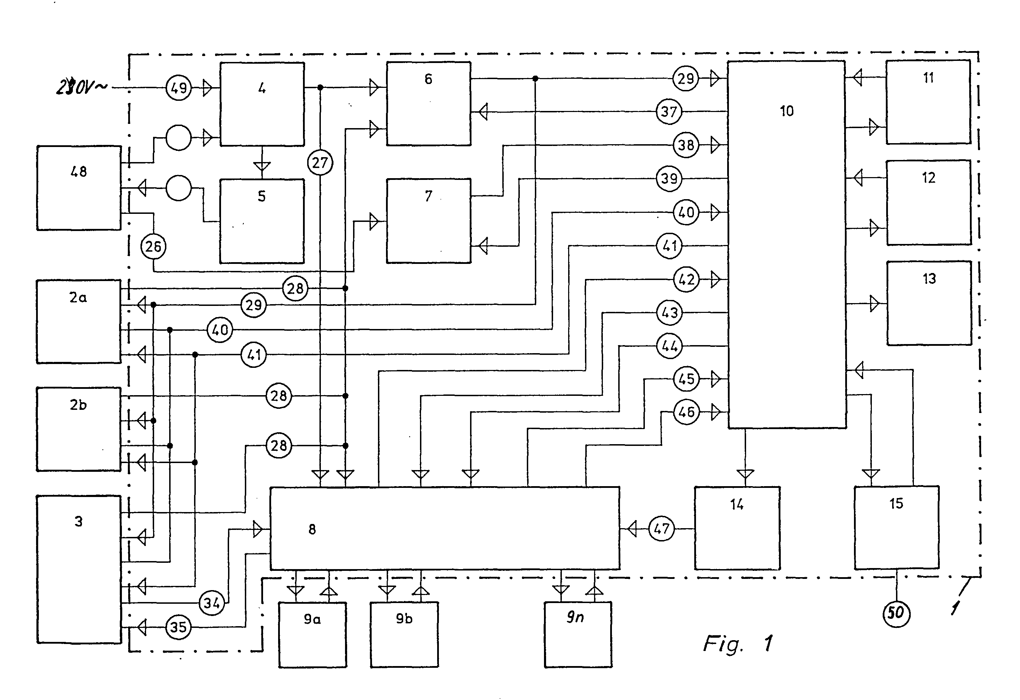

Die erfindungsgemäße Steuerung gemäß Figur 1 besteht aus einem Steuergerät 1, in welchem das Netzteil 4, die Stromversorgung 6, der Mikrokontroller 10 mit dem Watchdog-Timer 11 und einem Datenspeicher-EEPROM 12 enthalten sind. In Verbindung mit dem Mikrokontroller 10 steht der Schnittstellentreiber 15, der mit der Schnittstelle 50 zum Anschluß eines Programmiergerätes, beispielsweise in Form eines Personalcomputers, in Verbindung steht. Der Mikrokontroller 10 ist mit dem Motorleistungsteil 8 über den Relaistreiber 14 verbunden, über den die Ansteuerung der einzelnen Motoren 9a bis 9n realisiert ist. Für die Stromversorgung sind das Akkuladegerät 5, die Ladezustandskontrolle 7 sowie der Warntongeber 13 vorgesehen, die zusammen mit dem Netzteil 4 die Stromversorgung aller beteiligten Komponenten übernehmen. Als externe Komponenten sind an das Steuergerät 1 der Akku 48 sowie eine Netzspannungsversorgung 49, beispielsweise mit 230 Volt Wechselstrom, angeschlossen. Weiterhin sind als externe Geräte die Handschalter 2a und 2b sowie die Kontrollbox 3 angeschlossen, von denen aus alle Funktionen des Steuergerätes 1 bedient werden können.

Diese Komponenten des Steuergerätes 1 stellen einen flexiblen Aufbau für die Realisierung der zu steuernden Bewegungsfunktionen eines nicht dargestellten Krankenhausbettes dar, deren Zusammenwirken im folgenden schematisch beschrieben wird.

Die Handschalter 2a und 2b und die Kontrollbox 3 verfügen über jeweils eine nicht dargestellte Freigabetaste, die jeweils zusammen mit einer der ebenfalls nicht dargestellten Funktionstasten betätigt werden muß, um eine Bewegungsfunktion der Antriebe 9 zu bewirken. Wird nur eine Funktionstaste oder die Freigabetaste alleine betätigt, so wird keine der jeweiligen Funktionen ausgeführt. Eine derartige Freigabetaste kann beispielsweise auch in jede der Funktionstasten integriert werden, beispielsweise durch einen Doppelkontakt oder eine Folientastatur mit zwei Ebenen. Eine Freigabetaste der Handschalter 2a und 2b sowie der Kontrollbox 3 liefert das Signal 28, welches das Freigaberelais 16 betätigt und über die Stromversorgung 6 das Signal 29 hervorruft. Das Signal 29 bewirkt nun die Stromversorgung des Steuergerätes 1, der Handschalter 2a und 2b sowie der Kontrollbox 3. Die Stromversorgung 6 wird durch den Mikrokontroller 10 über das Signal 37 so lange aufrechterhalten, bis eine voreingestellte Zeit , beispielsweise 30 Sekunden, abgelaufen ist. Diese Zeit wird durch einen erneuten Tastendruck auf eine beliebige Taste jeweils zurückgesetzt. Durch diese Funktionalität kann das Steuergerät 1 in einen Schlafmodus versetzt werden, der nahezu keine Energie innerhalb des Steuergerätes 1 benötigt. Insbesondere für die später noch dargestellte Funktion des Betriebs des Steuergerätes 1 mittels des Akkus 48 über einen längeren Zeitraum ist dies von wichtiger Bedeutung. Diese Schlaffunktion ist nur aktiviert, wenn die Ladezustandskontrolle 7 über das Signal 38 dem Mikrokontroller 10 mitteilt, daß der Akku 48 vollgeladen ist. Sobald die Stromversorgung 6 ausgeschaltet ist, wird bei vorhandener Netzspannung 49 diese vom Netzteil 4 abgetrennt. Über eine nicht näher dargestellte Hilfsspannungsquelle im Netzteil 4 oder über den Akku 48 steht nun lediglich an den Freigabetasten der Handschalter 2a und 2b bzw. der Kontrollbox 3 eine Spannung ein, damit das Steuergerät 1 bei Bedarf wieder aktiviert werden kann. Dadurch wird erreicht, daß das Netzteil 4 außer Betrieb ist und dem Akku 48 kein Strom entnommen wird. Hierdurch ist insbesondere die Funktionalität eines Netzfreischalters realisiert, der gerade bei sensiblen Personen von besonderer gesundheitlicher Bedeutung sein kann.

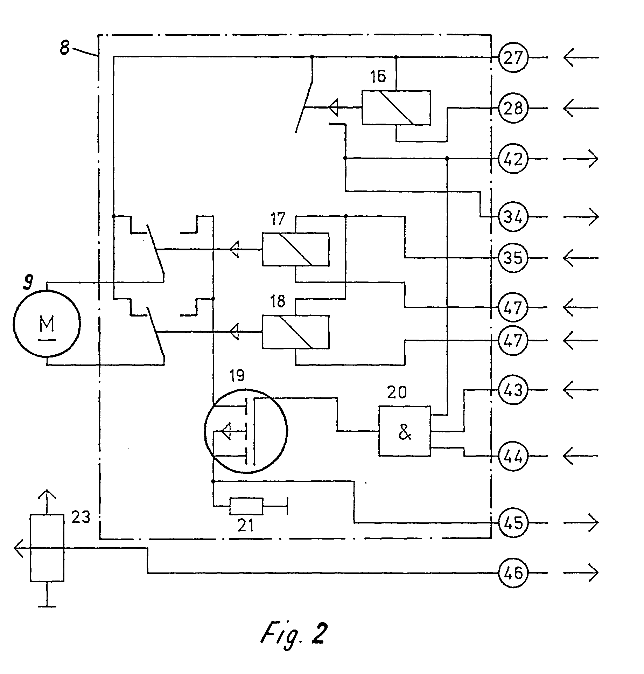

Unter besonderer Bezugnahme auf die Figur 2 ist in dem dort dargestellten Freigaberelais 16 die Funktion vorgegeben, daß über dieses Freigaberelais 16 eines oder mehrere der Motorrelais 17, 18 betätigt werden kann. Hierdurch ist gewährleistet, daß nach Loslassen einer Freigabetaste die Motoren 9 sicher abgeschaltet werden. Das Freigaberelais 16 kann beispielsweise auch durch einen entsprechenden elektronischen Schalter, beispielsweise ein Transistor, ersetzt werden.

Damit ein Motor 9 in Bewegung versetzt wird, müssen aber noch einige weitere Bedingungen erfüllt werden. Ein Motorrelais 17 oder 18 muß vom Relaistreiber 14 über das Signal 47 angesteuert werden und der Leistungstransistor 19 muß angesteuert sein. Diese Ansteuerung erfolgt über ein UND-Gatter 20, dessen drei Eingänge alle gleichzeitig angesteuert werden müssen. Es handelt sich hierbei einmal um ein Hardware-Freigabesignal 42, ein Software-Freigabesignal 43 und ein Pulsweitenmodulationssignal 44. Diese besondere Ansteuerung des UND-Gatters 20 bzw. des Leistungstransistors 19 dient zur Absicherung des Steuergerätes 1 in Bezug auf die Erstfehlersicherheit nach dem europäischen Normentwurf IEC 601-2-38, Sektion 9, Klausel 52.1.101. Sobald nur eine der Bedingungen durch die anstehenden Signale 42, 43, 44 nicht erfüllt ist, setzt sich der Motor 9 nicht in Bewegung. Durch diese Kombination von Signalen 42, 43, 44 wird sichergestellt, daß bei Auftreten eines einzelnen Fehlers in einer der genannten Sicherheitskomponenten, wie beispielsweise durch Ausfall des Mikrokontrollers 10, durch Kurzschluß in dem Steuergerät 1 oder durch einen Defekt in einer Signaltaste der Motor 9 sich ungewollt in Bewegung setzt und dadurch eine Gefährdung für den Patienten auf dem Krankenhausbett entstehen kann.

Weiterhin werden alle diese sicherheitsrelevanten Signale 42, 43, 44 durch Software in ihrer Funktion überwacht. Sobald eine unlogische Kombination der Signale 42, 43, 44 erkannt wird, wird eine Fehlfunktion optisch angezeigt. Dies ist zum Beispiel bereits der Fall, wenn eine der Signaltasten ohne die Freigabetaste betätigt wird, da sich eine Signaltaste verklemmt haben könnte und beim Betätigen der Freigabetaste sonst eine ungewollte Funktion ausgeführt wird.

Die ordnungsgemäße Funktion des Mikrokontrollers 10 wird durch den Watchdog-Timer 11 ständig überwacht. Sobald der Watchdog-Timer 11 keine regelmäßigen Signale vom Mikrokontroller 10 erhält, wird von diesem ein Reset erzeugt, wodurch sämtliche Ausgänge des Mikrokontrollers 10 in einen sicheren Zustand versetzt werden. Dies ist beispielsweise der Fall, wenn der Systemtakt des Mikrokontrollers 10 ausfällt oder der Programmzähler des Mikrokontrollers 10 unzulässig arbeitet.

Die Kontrollbox 3 ist zur Bedienung durch das Pflegepersonal vorgesehen und so angebracht, daß sie von dem auf dem Krankenhausbett liegenden Patienten nicht bedient werden kann. Beispielsweise ist auch eine Verriegelung der Kontrollbox 3 beispielsweise durch einen Deckel möglich, der nur vom Pflegepersonal geöffnet werden kann. Über die nicht dargestellten Funktionstasten der Kontrollbox 3 können sämtliche Bewegungen der Motoren 9 ausgeführt werden. Weiterhin sind hier nicht dargestellte Schalter angebracht, über welche einzelne der Motoren 9 gesperrt werden können, indem für jeden Motor 9 der Ansteuerstromkreis zwischen den Signalen 34 und 35 unterbrochen werden kann, damit dieser vom Patienten nicht mittels eines Handschalters 2a oder 2b bewegt werden kann. Dies kann beispielsweise aus medizinischen Gründen erforderlich sein, um unzulässige Bewegungen des Patienten zu verhindern.

An das Steuergerät 1 kann ein Akku 48 angeschlossen sein, welcher ermöglicht, daß bei Netzausfall oder während eines Transportes des Bettes die Verstellfunktionen des Krankenhausbettes gewährleistet sind. Dieser Akku 48 wird bei angeschlossenem Netzsignal 49 über das in das Steuergerät 1 integrierte Ladegerät 5 ständig nachgeladen. Bei vollgeladenem Akku 48 wird automatisch das Ladegerät 5 auf Erhaltungsladung umgeschaltet. Der Ladezustand des Akkus 48 wird vom Mikrokontroller 10 über die Ladezustandskontrolle 7 überwacht. Der Akku 48 wird zu diesem Zweck in regelmäßigen Intervallen kurzzeitig mit einem Widerstand über die Leitung 26 belastet. Unmittelbar zuvor wird die Spannung des Akkus 48 über die Leitung 38 gemessen. Nachdem ein Lastwiderstand über die Leitung 49 zugeschaltet wurde, wird die Spannung des Akkus 48 erneut gemessen. Über die Spannungsdifferenz beider Messungen kann nun der Innenwiderstand des Akkus 48 ermittelt werden. Dieser Innenwiderstand sagt aus, ob der Akku 48 für diesen Zweck geeignet ist. Bei sehr niedrigem Innenwiderstand ist der Akku 48 in Ordnung, bei zu großem Innenwiderstand wird ein Fehler des Akkus 48, beispielsweise durch eine rote LED, angezeigt. Gleichzeitig wird die momentane Spannung des Akkus 48 gemessen und über die Höhe der Spannung der Ladezustand des Akkus 48 ermittelt. Solange die Ladeschlußspannung nicht erreicht wurde, wird beispielsweise durch eine gelbe LED angezeigt, daß der Akku 48 geladen wird, aber noch nicht vollgeladen ist. Sobald die Ladeschlußspannung erreicht wird, leuchtet die LED grün. Ist kein Akku 48 angeschlossen, so bleibt die LED aus. Die Signalisierung des Ladezustandes des Akkus 48 kann beispielsweise mit einer einzigen LED erfolgen, die in der Lage ist, alle drei Farben darzustellen.

Wird das Steuergerät 1 ohne Netzanschluß und ohne Netzspannung 48 betrieben, so übernimmt der Akku 48 die Stromversorgung. In diesem Fall wird während des Betriebes, beispielsweise bei Betätigen einer Funktionstaste im Zusammenwirken mit der Freigabetaste, die Spannung des Akkus 48 gemessen und mit drei voreingestellten Grenzwerten verglichen. Bei Unterschreitung des ersten Grenzwertes wird beim Betrieb mit einem Handschalter 2a, 2b ein Intervallton durch den Warntongeber 13 übermittelt. Diese Schwelle wird bei Betrieb durch die Kontrollbox 3 ignoriert. Dieser Intervallton deutet auf eine baldige Erschöpfung des Akkus 48 hin, alle Funktionen des Steuergerätes 1 werden noch aufrechterhalten. Wird die zweite Schwelle bei Betrieb mittels der Handschalter 2a, 2b unterschritten, wird, solange eine Taste des Handschalters 2a, 2b betätigt ist, wird von dem Warntongeber 13 ein Dauerton erzeugt und der Motor 9 ausgeschaltet, damit der Akku 48 nicht weiter entladen werden kann. In diesem Fall ist jedoch ein Betrieb über die Kontrollbox 3 noch möglich, es ertönt jedoch hier ein Intervallton als Signal für einen Notbetrieb. Erst wenn die dritte Schwelle unterschritten wird, wird auch beim Betrieb über die Kontrollbox 3 der Motor 9 abgeschaltet und es ertönt mittels des Warntongebers 13 ein Dauerton zur Signalisierung eines Tiefentladeschutzes des Akkus 48.

Ein besonderer Vorteil des Steuergerätes 1 besteht darin, daß diese über eine Schnittstelle 50 verfügt, an welche beispielsweise ein PC angeschlossen werden kann. Über diese Schnittstelle 50 werden seriell Daten zwischen einem PC und dem Steuergerät 1 ausgetauscht. Mit Hilfe eines dazugehörigen Programmes können somit wichtige Variablen für die Bewegungsprogramme und die Programme selber verändert und angepaßt werden.

Beispielsweise kann der Stromgrenzwert vorgegeben werden, der bei Verfahren der Verstelleinrichtungen gegen ein mechanisches Hindernis ein Abschalten dieser Verstelleinrichtung bewirken soll. Darüberhinaus kann jeder einzelne Motor 9 ausgeschaltet werden und wird dann von dem Steuergerät 1 ignoriert, was beispielsweise bei nicht voll aufgerüsteten Krankenhausbetten mit weniger tatsächlich vorhandenen Motoren 9 als mit dem Steuergerät 1 möglich betrieben werden soll. Darüberhinaus ist für jeden Motor 9 und für jede Richtung ein Software-Endschalter einrichtbar, mit dem Wege beliebig begrenzt werden können. Hierdurch erübrigt sich das Vorsehen sonst aus Sicherheitsgründen notwendiger mechanischer Endschalter, die eine deutliche Verschlechterung der Flexibilität bei Anpassung zwischen dem Steuergerät 1 und dem Krankenhausbett bewirken würden.

Die verwendeten Motore 9 verfügen vorzugsweise direkt über einen absolut arbeitenden Weggeber 23, wie er in der Figur 2 dargestellt ist. Mit diesen beispielsweise als Potentiometer ausgeführten Wegmeßsystemen 23 ist eine direkte und von beispielsweise Zählfehlern unabhängige Erfassung der Stellung jeder einzelnen Verstelleinrichtung möglich, so daß der Mikrokontroller 10 zu jeder Zeit über die Positionen der angeschlossenen Motore 9 und damit über die Positionen der nicht dargestellten Verstelleinrichtungen informiert ist. Hierdurch ist es insbesondere möglich, Winkelüberschreitungen der Einzelsegmente eines Bettes bzw. Kollisionen von Teilen der Bettmechanik in kritischen Positionen zuverlässig zu verhindern. Diese Grenzwerte bzw. Winkelkombinationen können über die Software von dem Programmiergerät vorgegeben werden, wodurch in weiten Bereichen die Steuerung an verschiedene Kinematiken von Krankenhausbetten angepaßt werden kann.

Darüberhinaus ist es möglich, Motorgeschwindigkeiten für jede Verstelleinrichtung und für bestimmte Betriebssituationen des Krankenhausbettes einzeln vorzugeben. Es kann für kritische Situationen, beispielsweise zur schnellstmöglichen Einstellung einer Schocklage, eine maximale Motorgeschwindigkeit eingestellt werden, die für den normalen Betrieb des Steuergerätes 1 und des Krankenhausbettes nicht zulässig wäre.

Darüberhinaus können neutral bzw. vorgebbar abspeicherbare Positionen mittels des Programmiergerätes vorgegeben werden, die bei der Betätigung einer einzelnen Funktionstaste wieder abrufbar sind. Hierdurch kann beispielsweise beim Inbetriebnehmen eines Krankenhausbettes eine definierte Ausgangssituation geschaffen werden, um beispielsweise Transportstellungen oder Grundstellungen vorzugeben.

Die Programmierung des Steuergerätes 1 durch ein nicht dargestelltes Programmiergerät über die Schnittstelle 50 erfolgt in vorteilhafter Weise anhand von bedienerunterstützender Software, wobei auf dem Monitor des Programmiergerätes jederzeit die aktuelle Position der Motoren 9 bzw. der Verstelleinrichtungen dargestellt werden kann. Dies dient zur übersichtlichen Bedienung aller einzelnen Verstelleinrichtungen des Krankenhausbettes, darüberhinaus können Veränderungen einzelner Parameter des Steuergerätes 1 sofort danach auf ihre Auswirkungen auf das Krankenhausbett überprüft werden. Sind alle einstellbaren Bewegungscharakteristiken und Parameter in gewünschter Weise eingestellt, so können diese Parameter in dem Datenspeicher-EEPROM des Steuerungsgerätes 1 dauerhaft abgespeichert werden. Auch bietet diese Abspeicherung die Möglichkeit, daß verschiedene Software-Pakete für den Mikrokontroller 10 durch entsprechende Kombination aus EEPROM-Informationen zum entsprechenden Einsatz eines Steuergerätes 1 für eine Vielzahl von unterschiedlichen Bettkinematiken genutzt werden können. In besonders vorteilhafter Weise können diese bestimmten oder gewünschten Parameter nicht nur im EEPROM des Steuergerätes 1, sondern auch auf dem Programmiergerät abgespeichert sein. Durch eine entsprechende Software können diese Parameter dann in kürzester Zeit in mehrere gleichartige Steuergeräte 1 übertragen werden, ohne daß jeweils mittels des PC-Programmes eine Editierung von einzelnen Parametern erforderlich ist.

Ein Beispiel für eine derart vorgebbare Bewegungscharakteristik ist das Auffahren des Antriebes 9 einer Verstelleinrichtung auf ein Hindernis. Hierdurch wird der eingestellte Stromgrenzwert überschritten und der Motor 9 ausgeschaltet. Bleibt die Freigabetaste sowie die Funktionstaste weiterhin betätigt, so fährt der Motor 9 sich wieder frei, indem die Drehrichtung des Motors 9 für eine vorgebbare Zeit kurz umgekehrt wird. Hierdurch wird beispielsweise beim Vorliegen einer Klemmsituation diese Klemmsituation aufgehoben. Im Anschluß an dieses kurzzeitige Freifahren wird der Antrieb dann trotz betätigter Taste stillgesetzt.

Anhand der Figur 2 wird noch einmal die Funktionsweise eines Motorantriebes 9 näher erläutert. Sobald eine der nicht dargestellten Funktionstasten der Handschalter 2a oder 2b bzw. der Kontrollbox 3 betätigt wird, wird dort eine Impulsfolge erzeugt, welche über die Leitungen 40 zum Mikrokontroller 10 übertragen werden. Im Mikrokontroller 10 wird diese Impulsfolge dekodiert und bewirkt das Ausführen einer gewünschten Funktion, sofern gleichzeitig die Rückmeldung der Freigabe mittels des Signales 42 gemeldet wird. Sofern keine Störungsmeldung vorliegt, wird die Freigabe 43 vom Mikrokontroller 10 gegeben und das entsprechende Motorrelais 17 bzw. 18 geschaltet, indem über den Relaistreiber 14 das Ansteuersignal 43 geschaltet wird. Gleichzeitig wird vom Mikrokontroller 10 das Pulsweitenmodulationssignal 44 über das UND-Gatter 20 an den Leistungstransistor 19 geleitet, wodurch der Strom an den Motor 9 fließt. Das Pulsweitenmodulationssignal 44 ist eine gepulste Gleichspannung konstanter Frequenz, womit durch das Impuls-/Pausenverhältnis die effektive Spannung des Motors 9 verändert werden kann. Da der Mikrokontroller 10 die Ausgangsgleichspannung des Netzteiles 4 erfaßt, kann im Verhältnis dazu das Pulsweitenmodulationssignal 44 angepaßt werden. Dies ermöglicht eine annähernde Konstanthaltung der Spannung des Motors 9 im Normalbetrieb. Weiterhin kann über das Pulsweitenmodulationssignal 44 die Spannung des Motors 9 nach dem Einschalten des Motorrelais 17 oder 18 langsam von Null auf Motorendspannung gefahren werden, wodurch der Verschleiß des Motors 9 des nicht dargestellten Getriebes und der nicht dargestellten Mechanik des Bettes reduziert wird. Insbesondere wird auch ein nahezu ruckfreies Anfahren ermöglicht. Es kann darüberhinaus auch durch die Spannung des Motors 9 eine beliebige Geschwindigkeit des Motors 9 eingestellt werden, wodurch das Regelverhalten der Bewegungsabläufe positiv beeinflußt wird. Darüberhinaus wird durch die Pulsweitenmodulation die Motorspannung vor dem Abschalten des Relais 17 bzw. 18 zurückgefahren werden, wodurch die Relais 17, 18 nahezu stromlos ein- und ausgeschaltet werden und dies wiederum einen Verschleiß der Relais 17, 18 reduziert.

Ein weiterer Vorteil der Pulsweitenmodulation ist, daß die Stromaufnahme eines jeden Motors 9 beeinflußt werden kann. Der Strom durch den Motor 9 bewirkt einen Spannungsabfall über den Widerstand 21, wobei diese Spannung dem Mikrokontroller 10 durch das Signal 45 mitgeteilt wird. Der Mikrokontroller 10 vergleicht nach der Integration dieses Spannungswertes durch die Software den Motorstrom mit einem vorher programmierten Stromgrenzwert und reduziert bei Überschreitung dieses Grenzwertes die Spannung des Motors 9 durch Veränderung des entsprechenden Pulsweitenmodulationssignales 44 solange, bis der Grenzwert nicht mehr überschritten wird. Wird dieser Grenzwert dennoch innerhalb von einer einstellbaren Zeit, beispielsweise drei Sekunden, nicht unterschritten, so wird zunächst das Pulsweitenmodulationssignal 44 auf Null gefahren und danach das Motorrelais 17, 18 abgeschaltet, um den Motor 9 vor weiterer Überhitzung zu schützen. Mit dem Loslassen der Signaltaste wird diese Funktion wieder gelöscht.

### Bezugszeichenliste

- 1 -: Steuergerät
- 2a, 2b -: Handschalter
- 3 -: Kontrollbox
- 4 -: Netzteil
- 5 -: Akkuladegerät
- 6 -: Stromversorgung
- 7 -: Ladezustandskontrolle
- 8 -: Motorleistungsteil
- 9 -: Motorantriebe
- 10 -: Mikrokontroller
- 11 -: Watchdog-Timer
- 12 -: EEPROM/Datenspeicher
- 13 -: Warntongeber
- 14 -: Relaistreiber
- 15 -: PC-Schnittstellentreiber
- 16 -: Freigaberelais
- 17 -: Motorrelais
- 18 -: Motorrelais
- 19 -: Leistungstransistor
- 20 -: UND-Gatter
- 21 -: Widerstand
- 23 -: Potentiometer
- 26 -: Widerstandsleitung
- 27 -: Stromversorgung
- 28 -: Signal für Freigaberelais
- 29 -: Signal Stromversorgung
- 34 -: Trennstelle für Ansteuerstromkreis
- 35 -: Trennstelle für Ansteuerstromkreis
- 37 -: Signal Mikrokontroller/Stromversorgung
- 38 -: Signal Ladezustandskontrolle
- 39 -: Zuschaltung Lastwiderstand
- 40 -: Signal Handschalter, kodiert
- 41 -: Signal Handschalter, Rückmeldung
- 42 -: Hardware-Freigabesignal
- 43 -: Software-Freigabesignal
- 44 -: Pulsweitenmodulationssignal
- 45 -: Analogsignal Motorstrom
- 46 -: Analogsignal Motorposition
- 47 -: Signal Motorrelais
- 48 -: Akkumulator
- 49 -: Netzanschluß
- 50 -: Schnittstelle zum PC

## Patentansprüche

1. Steuerungssystem für elektromotorisch betätigbare Verstellungeinrichtungen an Krankenhausbetten, Pflegebetten oder ähnliche Möbel, bestehend aus einem Steuergerät (1), Stromversorgungseinrichtungen (5, 48), mindestens einem Stellmotor (9), mindestens einem Patienten-Handschalter (2a, 2b) und einer Kontrollbox (3) für das Pflegepersonal
**dadurch gekennzeichnet, daß**
an jeder Verstelleinrichtung des Krankenhausbettes absolut wirkende Wegmeßeinrichtungen (23) vorgesehen sind und das Steuergerät (1) einen frei programmierbaren Mikrokontroller (10) aufweist, dessen Steuerungsprogramm und interne Parameter mit einem an das Steuerungssystem zeitweise anschließbaren Programmiergerät derart veränderbar sind, daß das Steuerungssystem an bettenspezifische Bewegungsmöglichkeiten auch unterschiedlicher Verstelleinrichtungen und an unterschiedliche Betriebsweisen anpaßbar ist.

2. Steuerungssystem gemäß Anspruch 1, **dadurch gekennzeichnet, daß** das Steuerungsprogramm und die internen Parameter im Steuergerät (1) dauerhaft speicherbar sind.

3. Steuerungssystem gemäß einem der Ansprüche 1 oder 2, **dadurch gekennzeichnet, daß** das Steuerungsprogramm und die internen Parameter des Steuerungssystems durch das zeitweise anschließbare Programmiergerät wiederholt veränderbar sind.

4. Steuerungssystem gemäß Anspruch 1, **dadurch gekennzeichnet, daß** das Steuerungsprogramm und die internen Parameter auch in dem zeitweise anschließbaren Programmiergerät, vorzugsweise als betttypenspezifisches Profil abspeicherbar und in Steuerungen anderer, vorzugsweise baugleicher Krankenhausbetten einspeicherbar sind.

5. Steuerungssystem gemäß einem der vorstehenden Ansprüche, **dadurch gekennzeichnet, daß** das Steuerungsprogramm und die internen Parameter des Steuerungssystems betttypenspezifische Vorgaben, beispielsweise unzulässige Winkelüberschreitungen, Endstellungen aufgrund der Verstellkinematik, Abhängigkeiten von Verstellwinkeln untereinander, Zuordnungen von elektronischen Endschaltern zu Verstelleinrichtungen, Neutralpositionen und Verstellgeschwindigkeiten, beinhalten.

6. Steuerungssystem gemäß einem der vorstehenden Ansprüche, **dadurch gekennzeichnet, daß** das Steuerungsprogramm und die internen Parameter des Steuerungssystems betttypenspezifische Betriebsarten, beispielsweise wiederaufrufbare Abspeicherung von Bettstellungen, medizinisch indizierte Bettstellungen wie die Schockstellung oder dgl., Knieknickbewegungen und Bewegungssynchronisation mehrerer Verstelleinrichtungen, beinhalten.

7. Steuerungssystem gemäß einem der vorstehenden Ansprüche, **dadurch gekennzeichnet, daß** die Programmierung über das zeitweise anschließbare Programmiergerät mit einem dialogfähigen Programm erfolgt, das auch Betriebszustände der Verstelleinrichtungen des Krankenhausbettes erfaßt und darstellt.

8. Steuerungssystem gemäß einem der vorstehenden Ansprüche, **dadurch gekennzeichnet, daß** das zeitweise anschließbare Programmiergerät ein Personalcomputer, vorzugsweise ein tragbarer Laptop, Notebook oder dergleichen ist.

9. Steuerungssystem gemäß einem der vorstehenden Ansprüche, **dadurch gekennzeichnet, daß** das zeitweise anschließbare Programmiergerät auch Funktionen zu Servicezwecken ausführt.

10. Steuerungssystem gemäß Anspruch 1, **dadurch gekennzeichnet, daß** Sicherheitselemente und -funktionen in der Steuerung des Krankenhausbettes ständig Steuerungskomponenten und Signalzustände auf Vorliegen korrekter Funktion überprüfen und Bewegungen der Verstelleinrichtungen erst freigeben, wenn eine Überprüfung im Sinne der Erstfehlersicherheit stattgefunden hat.

11. Steuerungssystem gemäß Anspruch 10, **dadurch gekennzeichnet, daß** eine Watchdog-Funktion (11) zur Überprüfung des im Steuerungssystem enthaltenen Mikrokontrollers (10) vorgesehenen ist.

12. Steuerungssystem gemäß Anspruch 1, **dadurch gekennzeichnet, daß** als Wegmeßsystem (23) für jede elektromotorisch betätigbare Verstelleinrichtung Potentiometer vorgesehen sind.

13. Steuerungssystem gemäß einem der Ansprüche 1, 10 oder 11, **dadurch gekennzeichnet, daß** die Elektromotoren (9) mechanisch selbsthemmend ausgeführt sind.

14. Steuerungssystem gemäß einem der Ansprüche 1 oder 13, **dadurch gekennzeichnet, daß** ein weiches Anfahren und Abbremsen der Motoren (9) durch Spannungsregelung mittels Pulsweitenmodulation (44) vorgesehen ist.

15. Steuerungssystem gemäß einem der Ansprüche 1 oder 14, **dadurch gekennzeichnet, daß** für jeden Motor (9) eine individuelle Strombegrenzung vorgebbar ist.

16. Steuerungssystem gemäß einem der Ansprüche 1 oder 14, **dadurch gekennzeichnet, daß** bei Ansprechen der Strombegrenzung einer Verstelleinrichtung und gleichzeitig weiterhin betätigter Tasten eine kurzzeitige Drehrichtungsumkehr zum Freifahren der Verstelleinrichtung und danach ein Stillsetzen dieser Verstelleinrichtung erfolgt.

17. Steuerungssystem gemäß einem der Ansprüche 1 oder 10, **dadurch gekennzeichnet, daß** der Betrieb jeder Verstelleinrichtung nur bei gleichzeitiger Betätigung einer Funktionstaste und einer Freigabetaste vornehmbar ist.

18. Steuerungssystem gemäß Anspruch 1, **dadurch gekennzeichnet, daß** nach dem Ende einer Betätigung von Funktionen des Steuerungssystems eine zeitabhängige Abschaltung des Mikrokontrollers (10) in Form einer Schlaffunktion des Steuergerätes (1) erfolgt:

19. Steuerungssystem gemäß Anspruch 18, **dadurch gekennzeichnet, daß** bei Auslösen einer Funktion das Steuergerät (1) aus der Schlaffunktion in kurzer Zeit reaktivierbar ist.

20. Steuerungssystem gemäß Anspruch 1, **dadurch gekennzeichnet, daß** die Stromversorgung des Steuerungssystems über einen Netzanschluß (49) und/oder über einen wiederaufladbaren Akkumulator (48) erfolgt,

21. Steuerungssystem gemäß einem der Ansprüche 1 oder 20, **dadurch gekennzeichnet, daß** das Steuergerät (1) automatisch das Anschließen eines Akkumulators (48) erkennt und diesen je nach Ladezustand des angeschlossenen Akkus (48) automatisch lädt.

22. Steuerungssystem gemäß einem der Ansprüche 1 oder 20, **dadurch gekennzeichnet, daß** das Steuergerät (1) automatisch einen defekten Akkumulator (48) erkennt und den defekten Zustand signalisiert.

23. Steuerungssystem gemäß einem der Ansprüche 1 oder 20, **dadurch gekennzeichnet, daß** das Steuergerät (1) eine drohende Tiefentladung des Akkumulators (48) signalisiert und die Funktionen der Verstelleinrichtungen des Krankenhausbettes sperrt.

24. Steuerungssystem gemäß Anspruch 23, **dadurch gekennzeichnet, daß** ein kurzzeitiger Notbetrieb des Steuerungssystems und der Verstelleinrichtungen auch bei Ansprechen des Tiefentladeschutzes gewährleistet ist.

25. Steuerungssystem gemäß einem der Ansprüche 18 oder 24, **dadurch gekennzeichnet, daß** die Schlaffunktion des Steuergerätes (1) bei noch nicht vollgeladenem Akku (48) und angeschlossener Netzspannung (49) bis zur Volladung des Akkus (48) unterbleibt.

## Claims

1. Control system for adjustment devices, which can be operated by means of electric motors, on hospital beds, nursing beds or similar furniture, comprising a controller (1), power supply devices (5, 48), at least one actuating motor (9), at least one patient hand-operated switch (2a, 2b) and one control box (3) for the nursing personnel,
**characterized in that** absolute-distance measurement devices (23) are provided on each adjustment device for the hospital bed, and the controller (1) has a freely programmable microcontroller (10) whose control program and internal parameters can be varied by means of a programmer, which can be connected to the control system temporarily, in such a manner that the control system can be matched to bed-specific movement options, even with different adjustment devices, and to different methods of operation;

2. Control system according to Claim 1, **characterized in that** the control program and the internal parameters can be permanently stored in the controller (1).

3. Control system according to one of Claims 1 or 2,
**characterized in that** the control program and the internal parameters for the control system can be varied repeatedly by means of the programmer which can be temporarily connected.

4. Control system according to Claim 1, **characterized in that** the control program and the internal parameters can also be stored in the programmer which can be temporarily connected, preferably as a bed-type-specific profile, and can be stored in controllers for other hospital beds, preferably of the same type.

5. Control system according to one of the preceding claims, **characterized in that** the control program and the internal parameters for the control system include bed-type-specific presets, for example angles which must not be exceeded, limit positions based on the adjustment kinematics, relationships between adjustment angles, associations between electronic limit switches and adjustment devices, neutral positions and adjustment rates.

6. Control system according to one of the preceding claims, **characterized in that** the control program and the internal parameters for the control system include bed-type-specific operating modes, for example the storage of bed positions which can be recalled, medically indicated bed positions such as the position for administering electric shocks, or the like, knee-bending movements and synchronization of the movement of a number of adjustment devices.

7. Control system according to one of the preceding claims, **characterized in that** the programmer which can be temporarily connected is used for programming with a program which has a dialogue capability, and also detects and displays operating states of the adjustment devices of the hospital bed.

8. Control system according to one of the preceding claims, **characterized in that** the programmer which can be temporarily connected is a personal computer, preferably a portable laptop, notebook or the like.

9. Control system according to one of the preceding claims, **characterized in that** the programmer which can be temporarily connected also carries out functions for servicing purposes.

10. Control system according to Claim 1, **characterized in that** safety elements and functions in the control of the hospital bed continuously check that control components and signal states are functioning correctly, and adjustment device movements are allowed only once a check in the sense of first-fault safety has been carried out.

11. Control system according to Claim 10,
**characterized in that** a watchdog function (11) is provided for checking the microcontroller (10) contained in the control system.

12. Control system according to Claim 1, **characterized in that** potentiometers are provided as the distance measurement system (23) for each adjustment device which can be operated by means of electric motors.

13. Control system according to one of Claims 1, 10 or 11, **characterized in that** the electric motors (9) are designed to be mechanically self-locking.

14. Control system according to one of Claims 1 or 13,
**characterized in that** soft starting and braking of the motors (9) is provided by the use of pulse-width modulation (44) for voltage regulation.

15. Control system according to one of Claims 1 or 14,
**characterized in that** an individual current limit can be preset for each motor (9).

16. Control system according to one of Claims 1 or 14,
**characterized in that,** when the current limit of an adjustment device and of keys which are still operated at the same time is triggered, the adjustment device moves briefly in the opposite rotation direction in order to release it, and this adjustment device is then stopped.

17. Control system according to one of Claims 1 or 10,
**characterized in that** each adjustment device can be operated only when a function key and an enable key are operated at the same time.

18. Control system according to Claim 1, **characterized in that,** after operation of functions of the control system ends, the microcontroller (10) is switched off as a function of time, in the form of a sleep function for a controller (1).

19. Control system according to Claim 18,
**characterized in that,** when a function is initiated, the controller (1) can be reactivated from the sleep function in a short time.

20. Control system according to Claim 1, **characterized in that** power is supplied to the control system via a mains connection (49) and/or via a rechargeable battery (48).

21. Control system according to one of Claims 1 or 20,
**characterized in that** the controller (1) automatically identifies the connection of a rechargeable battery (48), and automatically charges it, depending on the charge state of the connected rechargeable battery (48).

22. Control system according to one of Claims 1 or 20,
**characterized in that** the controller (1) automatically identifies a defective rechargeable battery (48), and signals the defective state.

23. Control system according to one of Claims 1 or 20,
**characterized in that** the controller (1) signals that there is a threat of the rechargeable battery (48) being deep-discharged, and inhibits the functions of the adjustment devices of the hospital bed.

24. Control system according to Claim 23,
**characterized in that** brief emergency operation of the control system and of the adjustment devices is guaranteed even when the deep-discharge protection is triggered.

25. Control system according to one of Claims 18 or 24, **characterized in that** the sleep function of the controller (1) is inhibited when the rechargeable battery (48) has not yet been fully charged and the mains voltage (49) is connected, until the rechargeable battery (48) has been fully charged.

## Revendications

1. Système de commande pour dispositifs de réglage à actionnement électromotorisé, de lits d'hôpitaux, de lits de soins ou de meubles similaires, constitué d'un appareil de commande (1), de dispositifs d'alimentation en courant (5, 48), d'au moins un servomoteur (9), d'au moins un interrupteur manuel (2a, 2b) pour le patient et une boîte de contrôle (3) pour le personnel soignant,
**caractérisé en ce que**
sur chaque dispositif de réglage du lit d'hôpital sont prévus des dispositifs de mesure de distance (23) qui agissent de manière absolue, et l'appareil de commande (1) comporte un microcontrôleur (10) pouvant être programmé librement dont le programme de commande et les paramètres internes peuvent être modifiés au moyen d'un programmateur qui peut être raccordé temporairement au système de commande, de manière que le système de commande puisse être adapté à des possibilités de mouvements spécifiques du lit de dispositifs de réglage même différents, ainsi qu'à des modes de fonctionnement différents.

2. Système de commande selon la revendication 1, **caractérisé en ce que** le programme de commande et les paramètres internes peuvent être mémorisés durablement dans l'appareil de commande (1).

3. Système de commande selon l'une des revendications 1 ou 2, **caractérisé en ce que** le programme de commande et les paramètres internes du système de commande peuvent être modifiés à plusieurs reprises par le programmateur qui peut être raccordé temporairement.

4. Système de commande selon la revendication 1, **caractérisé en ce que** le programme de commande et les paramètres internes peuvent être mémorisés aussi dans le programmateur qui peut être raccordé temporairement, de préférence en tant que profil spécifique du type de lit, et introduits dans des commandes d'autres lits d'hôpitaux, de préférence de construction identique.

5. Système de commande selon l'une des revendications précédentes,
**caractérisé en ce que** le programme de commande et les paramètres internes du système de commande contiennent des consignes spécifiques au type de lit, par exemple des dépassements d'angle inadmissibles, des positions de fin de course sur la base de la cinématique de réglage, des dépendances réciproques d'angles de réglage, des affectations d'interrupteurs électroniques de fin de course à des dispositifs de réglage, des positions neutres et des vitesses de réglage.

6. Système de commande selon l'une des revendications précédentes,
**caractérisé en ce que** le programme de commande et les paramètres internes du système de commande contiennent des types de fonctionnement spécifiques au type de lit, par exemple des positions de lit mises en mémoire qui peuvent être rappelées, des positions de lit résultant d'indications médicales telles que la position de choc ou similaire, des mouvements de repliement des genoux et la synchronisation des mouvements de plusieurs dispositifs de réglage.

7. Système de commande selon l'une des revendications précédentes,
**caractérisé en ce que** la programmation s'effectue au moyen du programmateur, qui peut être raccordé temporairement, avec un programme conversationnel, qui enregistre et représente aussi des états de fonctionnement des dispositif de réglage du lit d'hôpital.

8. Système de commande selon l'une des revendications précédentes,
**caractérisé en ce que** le programmateur, qui peut être raccordé temporairement, est un ordinateur individuel, de préférence laptop portable, un agenda ou similaire.

9. Système de commande selon l'une des revendications précédentes,
**caractérisé en ce que** le programmateur, qui peut être raccordé temporairement, exécute aussi des fonctions à des fins d'entretien.

10. Système de commande selon la revendication 1, **caractérisé en ce que** des éléments de sécurité et des fonctions de sécurité dans la commande du lit d'hôpital contrôlent en permanence le fonctionnement correct de composants de la commande et d'état de signaux, et n'autorisent des mouvements des dispositifs de réglage que si un contrôle a eu lieu dans le sens de la sécurité de premier défaut.

11. Système de commande.selon la revendication 10, **caractérisé en ce qu'**il est prévu une fonction de chien de garde (11) pour le contrôle du microcontrôleur (10) contenu dans le système de commande.

12. Système de commande selon la revendication 1, **caractérisé en ce que** des potentiomètres sont prévus comme système de mesure de distance (23) pour chaque dispositif de réglage à actionnement électromotorisé.

13. Système de commande selon l'une des revendications 1, 10 ou 11,
**caractérisé en ce que** les moteurs électriques (9) sont à autoblocage mécanique.

14. Système de commande selon l'une des revendications 1 ou 13, **caractérisé en ce qu'**il est prévu un démarrage et un freinage en douceur des moteurs (9), par régulation de la tension, par modulation d'impulsions en largeur (44).

15. Système de commande selon l'une des revendications 1 ou 14, **caractérisé en ce que** pour chaque moteur (9) on peut sélectionner une limitation individuelle du courant.

16. , Système de commande selon l'une des revendications 1 ou 14, **caractérisé en ce que** dans le cas où intervient la limitation de courant d'un dispositif de réglage et en même temps des touches continuent d'être actionnées, il se produit une inversion de courte durée du sens de rotation, pour déplacer librement le dispositif de réglage, et il se produit ensuite une mise à l'arrêt de ce dispositif de réglage.

17. Système de commande selon l'une des revendications 1 ou 10, **caractérisé en ce qu'**il ne peut être procédé à la mise en service de chaque dispositif de réglage que si l'on actionne en même temps une touche de fonction et une touche d'autorisation.

18. Système de commande selon la revendication 1, **caractérisé en ce qu'**après achèvement d'un actionnement de fonctions du système de commande, il se produit une coupure temporelle du microcontrôleur 10, sous la forme d'une fonction de relâchement de l'appareil de commande 1.

19. Système de commande selon la revendication 18, **caractérisé en ce que** lorsqu'on déclenche une fonction, l'appareil de commande (1) peut être réactivé rapidement à partir de la fonction de relâchement.

20. Système de commande selon la revendication 1, **caractérisé en ce que** l'alimentation en courant du système de commande s'effectue par un branchement secteur (49) et/ou par un accumulateur rechargeable (48).

21. Système de commande selon l'une des revendications 1 ou 20, **caractérisé en ce que** l'appareil de commande (1) reconnait automatiquement le raccordement d'un accumulateur (48) et charge automatiquement celui-ci suivant l'état de l'accumulateur (48) raccordé.

22. Système de commande selon l'une des revendications 1 ou 20, **caractérisé en ce que** l'appareil de commande (1) reconnaît automatiquement un accumulateur (48) défectueux et signale l'état défectueux.

23. Système de commande selon l'une des revendications 1 ou 20, **caractérisé en ce que** l'appareil de commande (1) signale une décharge profonde imminente de l'accumulateur (48) et bloque les fonctions des dispositifs de réglage du lit d'hôpital.

24. Système de commande selon la revendication 23, **caractérisé en ce qu'**il est garanti un fonctionnement d'urgence de courte durée du système de commande et des dispositifs de réglage, même lorsqu'intervient la protection de décharge profonde.

25. Système de commande selon l'une des revendications 18 ou 24,
**caractérisé en ce que** la fonction de relâchement de l'appareil de commande (1) est suspendue, si l'accumulateur (48) n'est pas totalement chargé et lorsque la tension secteur (49) raccordée, jusqu'à la pleine charge de l'accumulateur (48).
